# EUROPÄISCHE PATENTANMELDUNG

(11) **EP 0 864 824 A2**
(43) Veröffentlichungstag der Anmeldung: **16.09.1998**
(21) Anmeldenummer: 98102472.2
(22) Anmeldetag: 13.02.1998
(51) Int. Cl.: F24J 2/26, F24J 2/50

(54) **Kollektor zum Aufnehmen von Sonnen- und Umgebungsenergie**

(30) Priorität: 15.03.1997 DE 19710915
(71) Anmelder: VIESSMANN WERKE GmbH & CO., 35107 Allendorf/Eder (DE)
(72) Erfinder: Strauss, Rolf-Peter, Dr.-Ing., 35066 Frankenberg (DE); Böhle, Werner, 35066 Frankenberg-Schreufa (DE); Wenzler, Sigurd, 35066 Frankenberg-Willersdorf (DE)
(74) Vertreter: Wolf, Günter, Dipl.-Ing.

(57) **Zusammenfassung**

Die Erfindung betrifft einen Kollektor zum Aufnehmen von Sonnen- oder Umgebungswärmeenergie, bestehend aus einer einstrahlungsseitig mit einer transparenten Abdeckung (4) versehenen Wärmeaufnahmefläche (F) und aus mindestens einer vom Wärmeträger durchströmbaren und in die Wärmeaufnahmefläche (F) eingebundenen Leitung (3). Nach der Erfindung ist die gesamte Wärmeaufnahmefläche (F) des Kollektors in eine Mehrzahl von kleinen Einzelflächen (2) gegliedert, die mit Abstand (A) zueinander an einem fortlaufenden, von der aus einem flexiblen Kunststoffschlauch (3') bestehenden Leitung (3) gebildeten Strang (S) angeordnet sind. Ferner sind die transparenten Abdeckungen (4), entsprechend gegliedert, in Form von Einzelschalen an den Rändern der Einzelflächen (2) fixiert. Damit ist ein Kollektor geschaffen, der gleichermaßen einfach, kostengünstig und ohne Längenbegrenzung am laufenden Band herstellbar ist, der ohne Entfernung der die Dachhaut bildenden Dachziegel einfach auf die bestehende Ziegel- oder sonstige Dachabdeckung auflegbar ist, damit keiner aufwendigen Unterkonstruktion bedarf, letztlich in seinem Erscheinungsbild im wesentlichen der Flächenstruktur eines Ziegeldaches entspricht und der trotz Einfachausbildung einen bzgl. Kastenkollektoren nahekommenden Wirkungsgrad hat.

## Beschreibung

Die Erfindung betrifft einen Kollektor zum Aufnehmen von Sonnen- und Umgebungsenergie, bestehend aus einer einstrahlungsseitig mit einer transparenten Abdeckung versehenen Wärmeaufnahmefläche und aus mindestens einer vom Wärmeträger durchströmbaren und in die Wärmeaufnahmefläche eingebundenen Leitung.

Kollektoren dieser Art sind bspw. nach dem DE-U-93 010 018 oder auch nach der US-A-4,493,940 bekannt. Diese in Form von Gehäusen ausgebildeten Kollektoren müssen mit Hilfe von mehr oder weniger aufwendigen Tragkonstruktionen über der Dachhaut bzw. der Dachziegeleindeckung installiert werden. Die gewohnte und übliche Dachziegelflächenstrukturierung wird optisch von beiden Arten von Kollektoren gestört, und zwar egal, ob die gesamte verfügbare Dachfläche oder nur ein Teil davon von den Kollektoren in Anspruch genommen wird. Die optische Beeinträchtigung mag jedoch dahingestellt bleiben, denn wesentlich wichtiger ist für Kollektoren, deren Herstellungs- und Installationsaufwand, wobei es sich bei Letzterem einerseits um die Installation auf dem Dach selbst handelt und andererseits um die hydraulischen Anschlußarbeiten.

So ist allein die Herstellung der in der Regel 1 bis 2 m² großen Gehäuse von Kollektoren der eingangs genannten Art sehr kostenträchtig, die aufgrund ihres Gewichtes nur mittels Hebezeugen auf das Dach zu bringen und dort auf der ebenfalls aufwendig vorzuinstallierenden Unter- bzw. Tragkonstruktion zu befestigen und die schließlich hydraulisch anzuschließen sind.

Der Erfindung liegt die Aufgabe zugrunde, einen Kollektor zu schaffen, der gleichermaßen einfach und ohne Längenbegrenzung am laufenden Band herstellbar ist, der ohne Entfernung der die Dachhaut bildenden Dachziegel einfach auf die bestehende Ziegel- oder sonstige Dachabdeckung auflegbar ist, damit keiner aufwendigen Unterkonstruktion bedarf und der letztlich in seinem Erscheinungsbild im wesentlichen der Flächenstruktur eines Ziegeldaches entspricht.

Diese Aufgabe ist mit einem Kollektor der eingangs genannten Art dahingehend gelöst, daß die gesamte Wärmeaufnahmefläche des Kollektors in eine Mehrzahl von kleinen Einzelflächen gegliedert ist, die mit Abstand zueinander an einem fortlaufenden, von der aus einem flexiblen Kunststoffschlauch bestehenden Leitung gebildeten Strang angeordnet sind, und daß die transparenten Abdeckungen, entsprechend gegliedert, in Form von Einzelschalen an den Rändern der Einzelflächen fixiert sind.

Wesentlich einfacher als Kastenkollektoren und mit geringerem Kostenaufwand herstellbar sind Einfachkollektoren zwar bspw. nach dem DE-U-79 23 166 und der EP-A-0 028 112 bekannt, diese sind aber in ihrer Konstruktion derart "abgemagert", daß es sich mehr oder weniger nur um wasserführende Blechabdeckungen handelt, die weit davon entfernt sind, mit einem einigermaßen vertretbaren Wirkungsgrad zu arbeiten. Bei der sogenannten Kupfer-Profiltafel gemäß DE-U-79 23 166 handelt es sich insoweit immer um einen kompletten Kollektor mit Vor- und Rücklaufanschlüssen, wobei mit Rücksicht auf die in Betracht gezogene Längenbemessung (bis max. 30 m!) offenbar daran gedacht ist, diese Längenbemessung an der Fallänge eines Daches zu orientieren, zumal eine dachziegelartige Staffelung in Längsrichtung solcher Platten nicht bzw. nicht ohne weiteres möglich ist. Das sogenannte Solar-Panel nach der EP-A-0 028 112 unterscheidet sich von dem gemäß DE-U-79 23 166 letztlich nur dadurch, daß am Panel nur eine Leitung vorgesehen ist. Für eine dachziegelartige Staffelung in Längsrichtung ist ein solches Panel ebenfalls nicht vorgesehen und geeignet. Außerdem wäre es in beiden Fällen schwierig, für eine wirkungsgraderhöhende, transparente Abdeckung zu sorgen, da diese "Kollektorbleche" immer als geschlossene Fläche installiert werden.

Demgegenüber zeichnet sich der erfindungsgemäße Kollektor durch die Auflösung einer erforderlichen Kollektorfläche in eine Vielzahl voneinander beabstandeten, am laufenden Band herstellbaren und sich an die Struktur einer Ziegelabdeckung anpassenden "Minikollektoren" aus, die auch insoweit bzgl. ihres Wirkungsgrades trotz ihrer Einfachheit wieder in die Nähe anspruchsvoller aber teurer Kastenkollektoren gerückt sind.

Völlig unabhängig von der tatsächlich zu installierenden Flächengröße eines Kollektors kann der erfindungsgemäße Kollektor äußerst vorteilhaft mit geeigneten und relativ einfachen Hilfseinrichtungen wie alle kettenartigen Produkte kontinuierlich und damit sehr kostengünstig hergestellt werden, da die kleinen Einzelflächen wie Perlen einer Perlenkette am fortlaufend der Hilfseinrichtung zugeführten, die Leitung bildenden Kunststoffschlauch angebracht werden können. Der erfindungsgemäße Kollektor mag zwar einerseits nicht ganz den guten Wirkungsgrad wie die einleitend erwähnten, aus verglasten und isolierten Flachgehäusen gebildeten Kollektoren erreichen, die entsprechend teuer und auch aufwendig zu installieren sind, andererseits liegt aber durch die gezielte Hintanstellung eines optimalen Wirkungsgrades ein äußerst kostengünstig herstell- und installierbarer Kollektor vor, für dessen Anschaffung und Installation die Kostenhemmschwelle ganz wesentlich gemindert ist.

Unter "kleinen Einzelflächen" sind dabei Flächengrößen von maximal 0,25 m² zu verstehen, mit Rücksicht auf gängige Dachziegelgrößen wird jedoch eine Bemessung derart bevorzugt, daß das Format der kleinen Einzelflächen maximal in der Größenordnung eines DIN A4- (29,7cm x 21cm) und minimal eines längshälftigen DIN A4-Formates (29,7cm x 10,5cm) bemessen ist.

Für eine bestimmte, zu installierende Kollektorflächengröße wird vom kontinuierlich hergestellten Kollektorstrang einfach die insgesamt dafür erforderliche Stranglänge abgeschnitten, was problemlos möglich ist, da die Einzelflächen mit einem bestimmten Abstand (wird noch näher erläutert) an der Leitung appliziert wird.

Durch die Auflösung bzw. Aufgliederung einer erforderlichen Kollektorfläche in viele kleine Einzelkollektoren und dadurch, daß der erfindungsgemäße Kollektor vorteilhaft einfach nur auf die bestehende Ziegeldachhaut aufgelegt zu werden braucht, wird die übliche Ziegeldachhautstruktur durch den Kollektor gewissermaßen optisch wiederholt und dadurch weitaus weniger optisch beeinträchtigt, als wenn Dachflächenansichten durch ein oder mehrere in der Regel bis zu 2 m² große Kollektorgehäuse verdeckt und damit unterbrochen werden. Solche Dachflächenunterbrechungen stellen sich noch unattraktiver dar, wenn entsprechend große Dachziegelbereiche ganz entfernt und durch "Einfachkollektoren" bspw. nach der vorerwähnten DE-U-79 23 166 oder EP-A-0 028 112 ersetzt werden.

Mit Rücksicht auf die unmittelbare Auflegbar- und Anpassbarkeit des Kollektors auf eine bestehende Ziegeldachhaut, was einerseits Eingriffe in die vorhandene Dachhaut und andererseits aufwendige Trag- und Befestigungskonstruktionen entbehrlich macht, sorgen der erfindungsgemäß einzuhaltende Abstand und der elastische Kunststoffschlauch zwischen den kleinen Einzelflächen dafür, daß sich der aufgelegte Kollektor an die gestaffelte Struktur einer Ziegeldachhaut anpassen kann.

Der er£indungsgemäße Kollektor und weitere vorteilhafte Ausführungsformen werden nachfolgend anhand der zeichnerischen Darstellung von Ausführungsbeispielen näher erläutert.

Es zeigt
- Fig. 1: einen Teilabschnitt des erfindungsgemäß fortlaufend als Strang hergestellten Kollektors;
- Fig. 2: eine andere Ausführungsform des Stranges gemäß Fig. 1;
- Fig. 3: einen Teilschnitt längs Linie III-III in Fig. 1 durch den Kollektor;
- Fig. 4: perspektivisch einen Teil einer Ziegeldachhaut mit aufgelegtem Kollektor;
- Fig. 5: einen Schnitt längs Linie V-V in Fig. 4;
- Fig. 6A, B: perspektivisch Ausführungsformen der transparenten Abdeckung;
- Fig. 7: perspektivisch und im Schnitt eine weitere Ausführungsform des Kollektors und
- Fig. 8: perspektivisch ein Anordnungsbeispiel eines Kollektors auf einer Ziegeldachhaut.

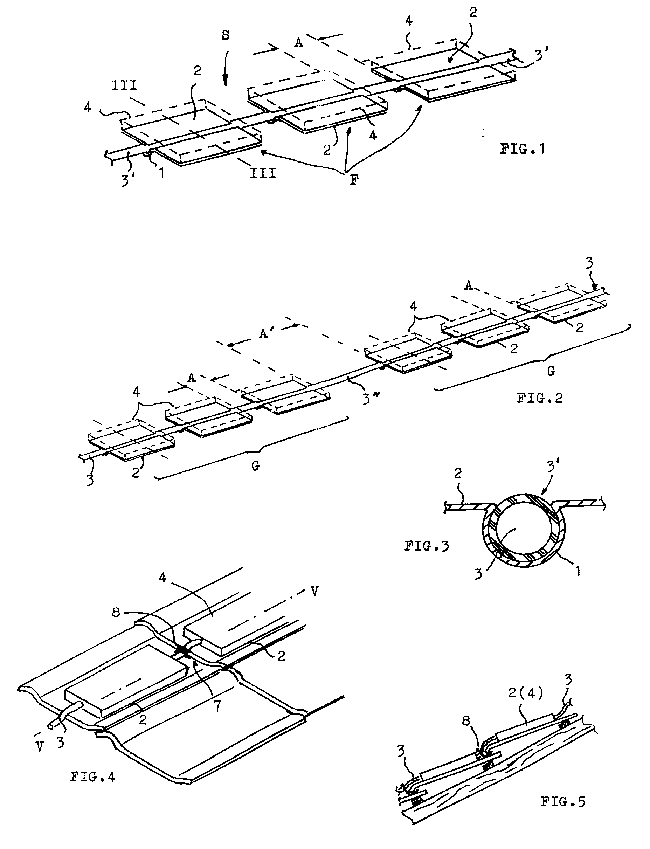

Der Kollektor besteht nach wie vor aus einer einstrahlungsseitig mit einer transparenten Abdeckung 4 versehenen Wärmeaufnahmefläche F und aus mindestens einer vom Wärmeträger durchströmbaren und in die Wärmeaufnahmefläche F eingebundenen Leitung 3. Orientiert zunächst nur an Fig. 1 ist für einen solchen Kollektor nunmehr jedoch wesentlich, daß die gesamte Wärmeaufnahmefläche F des Kollektors in eine Mehrzahl von kleinen Einzelflächen 2 gegliedert ist, die mit Abstand A zueinander an einem fortlaufenden, von der aus einem flexiblen Kunststoffschlauch 3' bestehenden Leitung 3 gebildeten Strang S angeordnet sind, und daß die transparenten Abdeckungen 4, entsprechend gegliedert, in Form von Einzelschalen an den Rändern der Einzelflächen 2 fixiert sind.

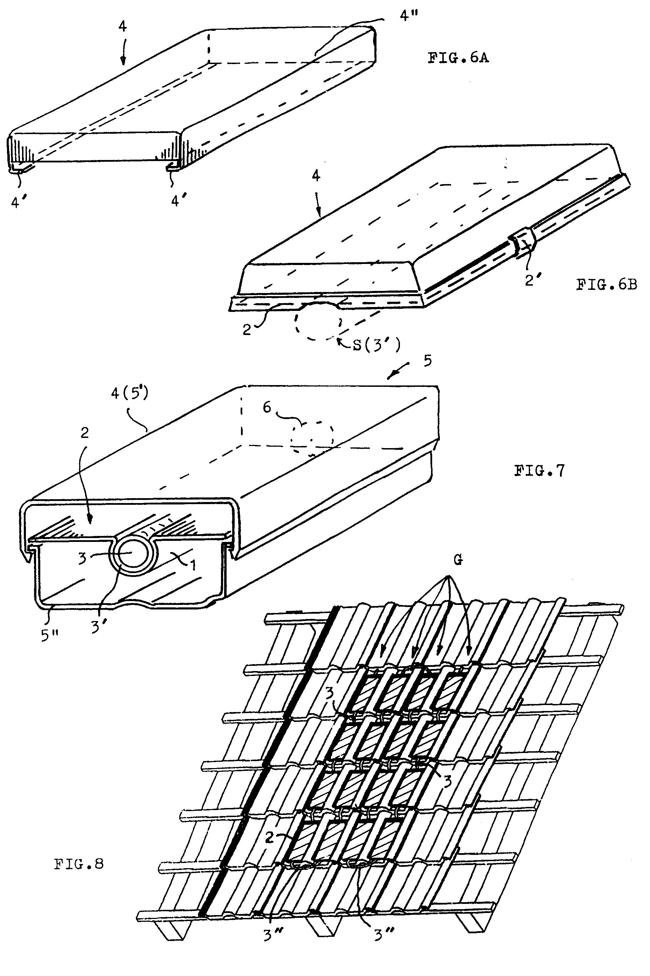

Bezüglich der Verlegung eines solchen Stranges S direkt auf einer Ziegeldachhaut (Zulaufanschluß zur Leitung 3 unten, Wärmeträgermediumsvorlaufanschluß oben) wird auf Fig. 4, 5 verwiesen, wobei insbesondere aus Fig. 4 auch deutlich wird, wie einfach ein solcher Kollektorstrang mit Befestigungsmitteln 7 an der Dachhaut festzulegen ist, bzw. durch hakenartige, die Leitung 3 übergreifende Bügel 8, die an der Ober- oder Unterkante des einen oder anderen Dachziegels verrastet werden, wofür der betreffende, aufliegende Dachziegel lediglich etwas angehoben werden muß.

Für die Anbindung der Einzelflächen 2 am Kunststoffschlauch 3' sind diese, wie in Fig. 3 dargestelt, mit einem formangepaßten Kröpfungskanal 1 versehen, in den der Kunststoffschlauch, sich dicht anschmiegend, bei der Herstellung am laufenden Band einfach eingedrückt wird, d.h., auch insofern ist ein elastischer Kunststoffschlauch 3' als Leitung 3 besonders vorteilhaft.

Die Maßgabe, daß das Format der kleinen Einzelflächen 2 maximal in der Größenordnung eines DIN A4- und minimal eines längshälftigen DIN A4-Formates bemessen ist, nimmt auf die gängigen Größen von Dachziegeln (bspw. sogenannte "Frankfurter Pfannen" Rücksicht, wobei die weitere Maßgabe "minimal eines längshälftigen DIN A4-Formates" bei solchen Pfannen deren spezielle Flächenstruktur (siehe Fig. 8) berücksichtigt.

Trotz der Aufgliederung einer Gesamtkollektorfläche F in eine Mehrzahl von kleinen Einzelflächen 2 ist es auf einfache Weise vorteilhaft möglich, die Einzelflächen 2 abzudecken bzw. abzuschirmen, nämlich derart, daß die kleinen Einzelflächen 2 mit einer Abdeckung 4 aus transparentem Kunststoff versehen sind. Eine solche Abdeckung 4 ist dabei vorteilhaft, wie bspw. in Fig. 6A dargestellt, ausgebildet, d.h., die Abdeckung 4 wird einfach mit ihren umgebogenen Seitenrändern 4' auf die Seitenränder der Einzelfläche 2 aufgeschoben, wobei ein entsprechend gestalteter, oberer Schmalseitenrand 4'' am oberen Schmalseitenrand der Einzelfläche 2 anschlägt. Es ist aber u.a. auch möglich, die Abdeckung gemäß Fig. 6B so auszubilden, daß diese einfach auf die Ränder der Einzelflächen 2 aufgeschnappt werden kann. Sofern erforderlich, kann dabei vorsorglich eine Fixierung durch Biegelaschen 2' an den Einzelflächen 2 erfolgen. Ferner kann in Betracht gezogen werden, dies allerdings mit größerem Aufwand, die kleinen Einzelflächen 2 in einem aus zwei flachen Schalen 5', 5'' gebildeten Gehäuse 5 mit Durchgriffsöffnungen 6 für den fortlaufenden Strang S der Leitung 3 (Kunststoffschlauch 3') anzuordnen, wobei von den Schalen 5', 5'' die Schale 5' die transparente Abdeckung 4 bildet. Hierzu wird auf Fig. 7 verwiesen.

Da Zuschnitt und Form der Einzelflächen 2 per se einer Stanz- und Prägebearbeitung bedürfen, besteht ferner eine vorteilhafte Ausführungsform darin, daß die Einzelflächen 2 oder auch die Unterschale 5'' des Gehäuses 5 mindestens in Teilbereichen einer Dachziegelflächenform nachgebildet sind, wie dies für die Unterschale 5'' ebenfalls in Fig. 7 dargestellt ist.

Abgesehen davon, daß Kollektorstränge S gemäß Fig. 1 parallel nebeneinander, jeweils angeschlossen an Zu- und Vorlaufsammler (nicht dargestellt), auf der Dachhaut angeordnet werden können, besteht eine vorteilhafte Weiterbildung gemäß Fig. 2 darin, daß am fortlaufenden Strang S des Kunststoffschlauches 3' die Einzelflächen 2 in Gruppen G gegliedert sind, in denen die Einzelflächen 2 an der Leitung 3 gleiche Abstände A zueinander haben, der Abstand A' der Gruppen G untereinander aber größer bemessen ist. Die Bemessung des Abstandes A berücksichtigt, wie vorerwähnt, die kleinen Höhenunterschiede der sich überlappenden Dachziegel (siehe Fig. 4, 5 und 8).

Wenn der ganze Kollektorstrang gemäß Fig. 2 in Gruppen G gegliedert ist, der Gesamtkollektor bzw. dessen Leitung 3 aber im Gegensatz zum vorerwähnten, an Sammler angeschlossenen Einzelsträngen S (Parallelströmer) gewissermaßen "in Reihe" durchströmt werden soll, wie dies in Fig. 8 dargestellt ist, ist der Abstand A' von Gruppe zu Gruppe bzw. sind die Leitungsabschnitte 3'' zwischen den Gruppen G so bemessen, daß die Gruppen G, wie in Fig. 8 verdeutlicht, ebenfalls parallel angeordnet werden können, dies aber ohne Zu- und Vorlaufsammler.

Im übrigen steht nichts entgegen, in den Einzelflächen 2 bspw. auch zwei Kröpfungskanäle 1 anzuordnen, so daß der ganze Kollektor mit zwei durchlaufenden Leitungen 3 bestückt werden kann.

## Patentansprüche

1. Kollektor zum Aufnehmen von Sonnen- oder Umgebungswärmeenergie, bestehend aus einer einstrahlungsseitig mit einer transparenten Abdeckung (4) versehenen Wärmeaufnahmefläche (F) und aus mindestens einer vom Wärmeträger durchströmbaren und in die Wärmeaufnahmefläche (F) eingebundenen Leitung (3),
**dadurch gekennzeichnet,**
daß die gesamte Wärmeaufnahmefläche (F) des Kollektors in eine Mehrzahl von kleinen Einzelflächen (2) gegliedert ist, die mit Abstand (A) zueinander an einem fortlaufenden, die aus einem flexiblen Kunststoffschlauch (3') bestehende Leitung (3) bildenden Strang (S) angeordnet sind, und daß die transparenten Abdeckungen (4), entsprechend gegliedert, in Form von Einzelschalen an den Rändern der Einzelflächen (2) fixiert sind.

2. Kollektor nach Anspruch 1,
**dadurch gekennzeichnet,**
daß das Format der kleinen Einzelflächen (2) maximal in der Größenordnung eines DIN A4- (29,7cm x 21cm) und minimal eines längshälftigen DIN A4-Formates (29,7cm x 10,5cm) bemessen ist.

3. Kollektor nach Anspruch 1 oder 2,
**dadurch gekennzeichnet,**
daß am fortlaufenden Strang (S) der Leitung (3) die Einzelflächen (2) in Gruppen (G) gegliedert sind, in denen die Einzelflächen (2) an der Leitung (3) gleiche Abstände (A) zueinander haben, der Abstand (A') der Gruppen (G) am Strang (S) untereinander aber größer bemessen ist.

4. Kollektor nach einem der Ansprüche 1 bis 3,
**dadurch gekennzeichnet,**
daß die kleinen Einzelflächen (2) jeweils in einem aus einer Schale (5') und einer Unterschale (5'') gebildeten Gehäuse (5) mit Durchgriffsöffnungen (6) für den fortlaufenden Strang (S) der Leitung (3) angeordnet sind.

5. Kollektor nach einem der Ansprüche 1 bis 4,
**dadurch gekennzeichnet,**
daß zwischen Einzelflächen (2) am Kunststoffschlauch (3') Befestigungsmittel (7) angeordnet sind.

6. Kollektor nach einem der Ansprüche 1 bis 5,
**dadurch gekennzeichnet,**
daß die Leitung (3) zwischen den Einzelflächen (2) mit Wärmeisolierungen versehen ist.

7. Kollektor nach einem der Ansprüche 1 bis 6,
**dadurch gekennzeichnet,**
daß die Einzelflächen (2) oder die Unterschale (5'') des Gehäuses (5) mindestens in Teilbereichen einer Dachziegelflächenform nachgebildet sind.

8. Kollektor nach einem der Ansprüche 1 bis 7,
**dadurch gekennzeichnet,**
daß die Schalen (4, 5') auf die Ränder der Einzelflächen (2) oder der Unterschale (5'') aufschieb- oder aufschnappbar ausgebildet sind.
